# EUROPEAN PATENT APPLICATION

(11) **EP 3 232 713 A1**
(43) Date of publication of application: **18.10.2017**
(21) Application number: 14909522.6
(22) Date of filing: 31.12.2014
(51) Int. Cl.: H04W 40/24

(54) **DATA TRANSMISSION METHOD, APPARATUS AND SYSTEM**

(71) Applicant: Huawei Technologies Co., Ltd., Longgang District Shenzhen, Guangdong 518129 (CN)
(72) Inventor: YIN, Jinrong, Shenzhen Guangdong 518129 (CN)
(74) Representative: Thun, Clemens
(86) International application number: PCT/CN2014/095979
(87) International publication number: WO 2016/106714

(57) **Abstract**

The present invention discloses a data transmission method, an apparatus, and a system. The method includes: receiving, by a mode multiplexer from an input port, a first optical signal transmitted by an optical line terminal; converting, according to a correspondence between an input port of an optical signal and a mode of the optical signal, the received first optical signal into a second optical signal in a mode corresponding to the input port; and multiplexing the second optical signal obtained by means of conversion to a few-mode optical fiber for transmission. This implements big data transmission by increasing a transmission capacity of a single optical fiber, and implements fast expansion of the transmission capacity, thereby improving total bandwidth utilization of a system.

## Description

### TECHNICAL FIELD

The present invention relates to the communications field, and in particular, to a data transmission method, an apparatus, and a system in the communications field.

### BACKGROUND

As users have ever-increasing bandwidth requirements, a conventional copper cable broadband access system is increasingly confronted with a bandwidth bottleneck. In addition, an optical fiber communications technology supporting a large bandwidth capacity increasingly grows mature, and application costs decrease annually. An optical fiber access network is highly competitive in a next-generation broadband access network. Especially, a passive optical network is more competitive.

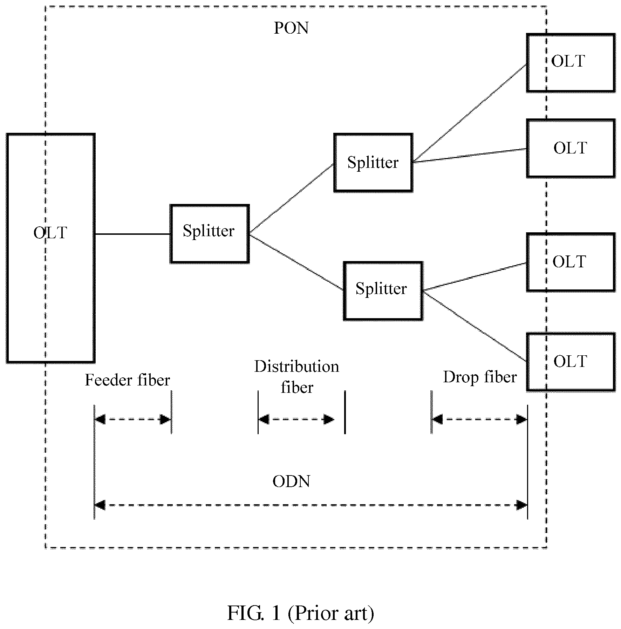

A structure of an existing Passive Optical Network (PON) system is shown in FIG. 1, including: an Optical line terminal (OLT) located in a central office, an Optical Distribution Network (ODN) for splitting/coupling or multiplexing/demultiplexing, and Optical Network Unit (ONU) or Optical Network Terminal (ONT).

The OLT provides a network side interface for the PON system, and is connected to one or more ODNs. As a passive optical splitter component, the ODN transmits downstream data of the OLT to the ONUs by means of splitting, and also transmits upstream data of the multiple ONUs/ONTs together to the OLT. The ONU provides a user side interface for the PON system, and is connected to the ODN in an upstream direction. If the ONU directly provides a user port function, for example, an Ethernet user port for Internet access by using a computer, the ONU is referred to as an ONT. Unless otherwise specified, the ONU mentioned below is an ONU or an ONT.

The ODN is generally divided into three parts: a passive optical splitter, a Feed Fiber, and a Distribute Fiber and a Drop Fiber. The distribution fiber and the drop fiber may be collectively referred to as a drop fiber. The figure is a structural diagram of a level-2 splitting ODN, and a level-1 splitting ODN has only the feeder fiber and the drop fiber.

In the PON system, a direction from the OLT to the ONU is referred to as downstream, and a direction from the ONU to the OLT is referred to as upstream. Downstream data is broadcasted to the ONUs by virtue of a light characteristic, and upstream data of the ONUs is transmitted, by means of time division multiplexing, at transmission intervals allocated by the OLT. Upstream light and downstream light may be transmitted in a same optical fiber, or upstream light and downstream light each may be transmitted in an optical fiber.

As an optical access network, a PON network has sufficient bandwidth for ordinary home users. However, as a wireless mobile communications network develops, and a distributed base station networking mode is used, a bandwidth requirement on a mobile bearer dramatically increases. Currently, an existing mobile bearer solution cannot meet the requirement. Therefore, it is urgently to provide a novel large-bandwidth and wide-coverage PON network and use the novel large-bandwidth and wide-coverage PON network as a solution to a mobile bearer network.

### SUMMARY

Embodiments of the present invention provide a data transmission method, an apparatus, and a system, to implement big data transmission by increasing a transmission capacity of a single optical fiber, thereby implementing a bandwidth requirement in a mobile bearer field, and greatly improving total bandwidth utilization of a system.

According to a first aspect, a data transmission method is provided, where the method is applied to a spatial division multiplexing system, the spatial division multiplexing system includes at least an optical line terminal, a mode multiplexer, a mode demultiplexer, an optical splitter, and an optical network unit, the optical line terminal is connected to the mode multiplexer by using a single-mode optical fiber, the mode multiplexer is connected to the mode demultiplexer by using a few-mode optical fiber, the mode demultiplexer is connected to the optical splitter by using a single-mode optical fiber, the optical splitter is connected to the optical network unit, and the method includes:
receiving, by the mode multiplexer from an input port, a first optical signal transmitted by the optical line terminal;
converting, by the mode multiplexer according to a correspondence between an input port of an optical signal and a mode of the optical signal, the received first optical signal into a second optical signal in a mode corresponding to the input port; and
multiplexing, by the mode multiplexer, the second optical signal obtained by means of conversion to the few-mode optical fiber for transmission, where a quantity of modes supported by the few-mode optical fiber is between a quantity of modes supported by a multimode optical fiber and a quantity of modes supported by the single-mode optical fiber.

In the first aspect, in a first implementation, the method further includes:
upon startup of the optical line terminal, transmitting, by the optical line terminal, a first training sequence to the optical network unit; and
estimating, by the optical line terminal, a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; and obtaining a pre-emphasis coefficient according to the estimated first crosstalk channel coefficient.

With reference to the first aspect and the first implementation of the first aspect, in a second implementation of the first aspect, the method further includes:
performing, by the optical line terminal according to the pre-emphasis coefficient, pre-emphasis on a to-be-transmitted optical signal on the first link to eliminate crosstalk.

With reference to the first aspect, the first implementation of the first aspect, or the second implementation of the first aspect, in a third implementation of the first aspect, the method further includes:
receiving, by the optical line terminal, a first bit error rate transmitted by the optical network unit that is connected to the optical line terminal by using the first link; and
adjusting, by the optical line terminal, the pre-emphasis coefficient according to the received first bit error rate.

With reference to the first aspect, the first implementation of the first aspect, or the second implementation of the first aspect, in a fourth implementation of the first aspect, the method further includes:
upon working startup of the optical line terminal or upon working startup of the optical network unit, receiving, by the line terminal, a second training sequence transmitted by the optical network unit;
estimating, by the line terminal, a second crosstalk channel coefficient of second crosstalk on the first link from the optical network unit to the optical line terminal according to the second training sequence transmitted by the optical network unit, where the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; and
obtaining, by the line terminal, a crosstalk cancellation coefficient according to the estimated second crosstalk channel coefficient.

With reference to the fourth implementation of the first aspect, in a fifth implementation of the first aspect, the method further includes:
processing, by the optical line terminal according to the crosstalk cancellation coefficient, an optical signal received on the first link to eliminate crosstalk.

With reference to the fourth implementation of the first aspect, in a sixth implementation of the first aspect, the method further includes:
calculating, by the optical line terminal, a second bit error rate according to the received optical signal transmitted by the optical network unit; and
adjusting, by the optical line terminal, the pre-emphasis coefficient according to the received second bit error rate.

With reference to the first aspect, in a seventh implementation of the first aspect, the method further includes:
receiving, by the mode demultiplexer, the second optical signal transmitted by the mode multiplexer;
determining, by the mode demultiplexer according to a correspondence between an output port of an optical signal and a mode of the optical signal, an output port corresponding to a mode of the received second optical signal; and
converting, by the mode demultiplexer, the second optical signal into a single-mode optical signal, and outputting the single-mode optical signal obtained by means of conversion from the determined output port.

According to a second aspect, a data transmission method is provided, where the method is applied to a spatial division multiplexing system, the spatial division multiplexing system includes at least an optical line terminal, a mode multiplexer, a mode demultiplexer, an optical splitter, and an optical network unit, the optical line terminal is connected to the mode multiplexer by using a single-mode optical fiber, the mode multiplexer is connected to the mode demultiplexer by using a few-mode optical fiber, the mode demultiplexer is connected to the optical splitter by using a single-mode optical fiber, the optical splitter is connected to the optical network unit, a quantity of modes to which optical signals transmitted in the few-mode optical fiber belong is between a quantity of modes supported by a multimode optical fiber and a quantity of modes supported by the single-mode optical fiber, and the method includes:
upon startup of the optical line terminal, transmitting, by the optical line terminal, a first training sequence to the optical network unit;
estimating, by the optical line terminal, a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units;
obtaining, by the optical line terminal, a pre-emphasis coefficient according to the estimated first crosstalk channel coefficient; and
performing, by the optical line terminal according to the pre-emphasis coefficient, pre-emphasis on a to-be-transmitted optical signal on the first link to eliminate crosstalk.

With reference to the second aspect, in a first manner, the method further includes:
receiving, by the optical line terminal, a first bit error rate transmitted by the optical network unit that is connected to the optical line terminal by using the first link; and
adjusting, by the optical line terminal, the pre-emphasis coefficient according to the received first bit error rate.

With reference to the second aspect, in a second implementation, the method further includes: upon working startup of the optical line terminal or upon working startup of the optical network unit, receiving, by the line terminal, a second training sequence transmitted by the optical network unit;
estimating a second crosstalk channel coefficient of second crosstalk on the first link from the optical network unit to the optical line terminal according to the second training sequence transmitted by the optical network unit, where the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; and
obtaining, by the optical line terminal, a crosstalk cancellation coefficient according to the estimated second crosstalk channel coefficient.

With reference to the second aspect, in a third implementation, the method further includes:
processing, by the optical line terminal according to the crosstalk cancellation coefficient, an optical signal received on the first link to eliminate crosstalk.

With reference to the second aspect, in a fourth implementation, the method further includes:
the method further includes:
   calculating, by the optical line terminal, a second bit error rate according to the received optical signal transmitted by the optical network unit; and
   adjusting, by the optical line terminal, the pre-emphasis coefficient according to the received second bit error rate.

According to a third aspect, a mode multiplexer is provided, where the mode multiplexer includes:
a first port processing unit, configured to: receive a first optical signal transmitted by an optical line terminal from an input port of the mode multiplexer; and multiplex the second optical signal obtained by means of conversion to a few-mode optical fiber according to an instruction from a first processor for transmission; and
the first processor, configured to: convert, according to a correspondence between an input port of an optical signal and a mode of the optical signal, the received first optical signal into the second optical signal in a mode corresponding to the input port; and instruct the port processing unit to multiplex the second optical signal to the few-mode optical fiber for transmission, where a quantity of modes supported by the few-mode optical fiber is between a quantity of modes supported by a multimode optical fiber and a quantity of modes supported by a single-mode optical fiber.

According to a fourth aspect, an optical line terminal is provided, where the optical line terminal includes:
a first transmitter, configured to: upon startup of the optical line terminal, transmit, by the optical line terminal, a first training sequence to the optical network unit; and transmit the pre-emphasized optical signal according to an instruction from a second processor; and
the second processor, configured to: estimate a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; perform pre-emphasis on a to-be-transmitted optical signal on the first link according to the pre-emphasis coefficient; and instruct the transmitter to transmit the pre-emphasized optical signal.

With reference to the fourth aspect, in a first implementation of the fourth aspect, the optical line terminal further includes:
a first receiver, configured to receive a first bit error rate transmitted by the optical network unit that is connected to the optical line terminal by using the first link; where
the second processor is further configured to adjust the pre-emphasis coefficient according to the received first bit error rate; and
the first transmitter is further configured to transmit the pre-emphasized optical signal according to the instruction from the second processor.

With reference to the fourth aspect, in a second implementation of the fourth aspect, the first receiver is further configured to: upon working startup of the optical line terminal or upon working startup of the optical network unit, receive, by the line terminal, a second training sequence transmitted by the optical network unit; and
the second processor is further configured to: estimate a second crosstalk channel coefficient of second crosstalk on the first link from the optical network unit to the optical line terminal according to the second training sequence transmitted by the optical network unit, where the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; obtain a crosstalk cancellation coefficient according to the estimated second crosstalk channel coefficient; and process, according to the crosstalk cancellation coefficient, an optical signal received on the first link to eliminate crosstalk.

With reference to the fourth aspect, in a third implementation of the fourth aspect, the second processor is further configured to: calculate a second bit error rate according to the received optical signal transmitted by the optical network unit; adjust the pre-emphasis coefficient according to the received second bit error rate; and perform, according to an adjusted second pre-emphasis coefficient, adjusted pre-emphasis on data received on the first link to eliminate crosstalk.

According to a fifth aspect, a mode demultiplexer is provided, where the mode demultiplexer includes:
a second port processing unit, configured to receive a second optical signal; and output, according to an instruction from the third processor, the single-mode optical signal obtained by means of conversion from the determined output port; and
the third processor, configured to: determine, according to a correspondence between an output port of an optical signal and a mode of the optical signal, an output port corresponding to a mode of the received second optical signal; convert the second optical signal into the single-mode optical signal; and instruct the second port processing unit to output the single-mode optical signal obtained by means of conversion from the determined output port.

According to a sixth aspect, a spatial division multiplexing system is provided, where the spatial division multiplexing system includes at least the embodiment described in the third aspect.

With reference to the sixth aspect, in a first implementation of the sixth aspect, the system further includes the embodiment described in the fourth aspect.

According to a seventh aspect, a data communications apparatus is provided, where the apparatus includes a processor, a memory, and a bus system; the processor and the memory are connected by using the bus system; the memory is configured to store an instruction; and the processor is configured to execute the instruction stored in the memory; and
the processor is configured to: receive, from an input port, a first optical signal transmitted by an optical line terminal; convert, according to a correspondence between an input port of an optical signal and a mode of the optical signal, the received first optical signal into a second optical signal in a mode corresponding to the input port; and multiplex the second optical signal obtained by means of conversion to a few-mode optical fiber for transmission, where a quantity of modes supported by the few-mode optical fiber is between a quantity of modes supported by a multimode optical fiber and a quantity of modes supported by a single-mode optical fiber.

According to an eighth aspect, a data communications apparatus is provided, where the apparatus includes a processor, a memory, and a bus system; the processor and the memory are connected by using the bus system; the memory is configured to store an instruction; and the processor is configured to execute the instruction stored in the memory; and
the processor is configured to: upon startup of an optical line terminal, transmit a first training sequence to the optical network unit; estimate a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; and perform pre-emphasis on a to-be-transmitted optical signal on the first link according to the pre-emphasis coefficient to eliminate crosstalk.

Based on the foregoing technical solutions, the embodiments of the present invention propose a data transmission method, an apparatus, and a system. A mode multiplexer receives, from an input port, a first optical signal transmitted by an optical line terminal; converts, according to a correspondence between an input port of an optical signal and a mode to which the optical signal belongs, the received first optical signal into a second optical signal in a mode corresponding to the input port; and multiplexes the second optical signal obtained by means of conversion to a few-mode optical fiber for transmission. This implements big data transmission by increasing a transmission capacity of a single optical fiber, and implements fast expansion of the transmission capacity, thereby improving total bandwidth utilization of a system.

Further, according to the data transmission method provided in the present invention, channel coefficient estimation may be further performed according to a transmitted training sequence, to perform noise reduction processing. This resolves a problem that mutual crosstalk between optical signals in a few-mode optical fiber causes communication performance deterioration, implements noise reduction processing in the few-mode optical fiber, and greatly improves communication performance.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a networking architecture diagram of a PON system in the prior art;
FIG. 2 is a schematic block diagram of an application scenario according to an embodiment of the present invention;
FIG. 3 is a schematic flowchart of a data transmission method according to an embodiment of the present invention;
FIG. 4 is another specific descriptive flowchart of a data transmission method according to an embodiment of the present invention;
FIG. 5 is a specific descriptive flowchart of a data transmission method according to an embodiment of the present invention;
FIG. 6 is a schematic block diagram of a data transmission method according to an embodiment of the present invention;
FIG. 7 is another schematic block diagram of a data transmission method according to an embodiment of the present invention;
FIG. 8 is a schematic block diagram of a mode multiplexer according to an embodiment of the present invention;
FIG. 9 is a schematic block diagram of an optical line terminal according to an embodiment of the present invention;
FIG. 10 is a structural block diagram of a mode demultiplexer according to an embodiment of the present invention; and
FIG. 11 is a schematic block diagram of a data communications apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

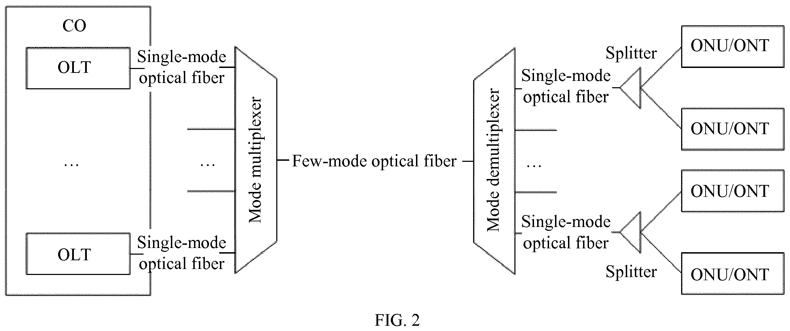

FIG. 2 shows a schematic block diagram of an application scenario according to an embodiment of the present invention. As shown in FIG. 2, the system is a multimode optical fiber-based spatial division multiplexing (Spatial Division Multiplexing, SDM) system, including: an optical line terminal OLT located in a central office (Central Office, CO), a mode multiplexer, a mode demultiplexer, and an optical network unit ONU/an optical network terminal ONT. Each OLT is connected to the mode multiplexer by using a single-mode optical fiber. The mode multiplexer and the mode demultiplexer are connected by using a few-mode optical fiber. The mode demultiplexer is connected to the ONU or the ONT by using a single-mode optical fiber. Alternatively, the mode demultiplexer is connected to an optical splitter by using a single-mode optical fiber, and further connected to one or more ONUs or ONTs as shown. The mode multiplexer transmits, by using the single-mode optical fiber, optical signals transmitted by all the optical line terminals, and multiplexes the optical signals to the few-mode optical fiber between the mode multiplexer and the mode demultiplexer. The mode demultiplexer is configured to transmit the received optical signals to the optical network unit by using each single-mode optical fiber connected between the mode demultiplexer and the optical network unit or the ONT, for data processing. The mode multiplexer has multiple input ports, and the mode demultiplexer has multiple output ports. An input port of the mode multiplexer has a correspondence with an output port of the mode demultiplexer. For example, the mode demultiplexer forwards, by using a first output port of the mode demultiplexer, an optical signal received from a first input port of the mode multiplexer.

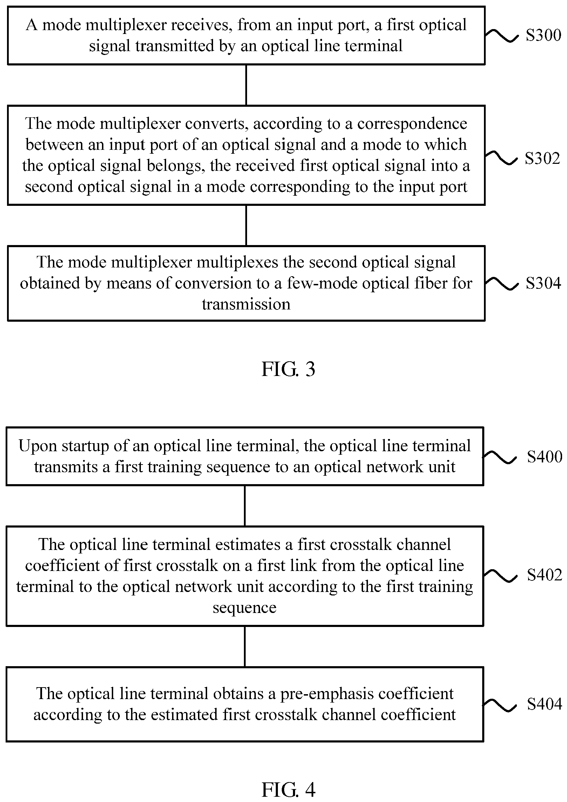

FIG. 3 shows a schematic flowchart of a data transmission method according to an embodiment of the present invention. The method may be executed by a data communications apparatus, for example, the mode multiplexer in FIG. 2. The data transmission method may be applied to the networking architecture diagram in FIG. 2.

As shown in FIG. 2, the data transmission method is applied to the spatial division multiplexing system. The spatial division multiplexing system includes at least the optical line terminal, the mode multiplexer, the mode demultiplexer, the optical splitter, and the optical network unit. The optical line terminal is connected to the mode multiplexer by using the single-mode optical fiber. The mode multiplexer is connected to the mode demultiplexer by using the few-mode optical fiber. The mode demultiplexer is connected to the optical splitter by using the single-mode optical fiber. The optical splitter is connected to the optical network unit. For the method, refer to FIG. 3. The method includes the following steps:
S300. The mode multiplexer receives, from an input port, a first optical signal transmitted by the optical line terminal.
S302. The mode multiplexer converts, according to a correspondence between an input port of an optical signal and a mode of the optical signal, the received first optical signal into a second optical signal in a mode corresponding to the input port.
S304. The mode multiplexer multiplexes the second optical signal obtained by means of conversion to the few-mode optical fiber for transmission, where a quantity of modes supported by the few-mode optical fiber is between a quantity of modes supported by a multimode optical fiber and a quantity of modes supported by the single-mode optical fiber.

Further, the method further includes:
upon startup of the optical line terminal, transmitting, by the optical line terminal, a first training sequence to the optical network unit;
estimating, by the optical line terminal, a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; and
obtaining a pre-emphasis coefficient according to the estimated first crosstalk channel coefficient.

Further, the method further includes:
performing, by the optical line terminal, pre-emphasis on a to-be-transmitted optical signal on the first link according to the pre-emphasis coefficient to eliminate crosstalk.

Further, the method further includes:
receiving, by the optical line terminal, a first bit error rate transmitted by the optical network unit that is connected to the optical line terminal by using the first link; and
adjusting, by the optical line terminal, the pre-emphasis coefficient according to the received first bit error rate.

Further, the method further includes:
upon working startup of the optical line terminal or upon working startup of the optical network unit, receiving, by the optical line terminal, a second training sequence transmitted by the optical network unit;
estimating a second crosstalk channel coefficient of second crosstalk on the first link from the optical network unit to the optical line terminal according to the second training sequence transmitted by the optical network unit, where the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; and
obtaining a crosstalk cancellation coefficient according to the estimated second crosstalk channel coefficient.

Further, the method further includes:
processing, by the optical line terminal according to the crosstalk cancellation coefficient, an optical signal received on the first link to eliminate crosstalk.

Further, the method further includes:
calculating, by the optical line terminal, a second bit error rate according to the received optical signal transmitted by the optical network unit; and
adjusting, by the optical line terminal, the crosstalk cancellation coefficient according to the received second bit error rate.

Further, the method further includes:
receiving, by the mode demultiplexer, a second optical signal;
determining, by the mode demultiplexer according to a correspondence between an output port of an optical signal and a mode of the optical signal, an output port corresponding to a mode of the received second optical signal; and
converting the second optical signal into a single-mode optical signal, and outputting the single-mode optical signal obtained by means of conversion from the determined output port.

This embodiment of the present invention provides a data transmission method. A mode multiplexer receives, from an input port, a first optical signal transmitted by an optical line terminal; converts, according to a correspondence between an input port of an optical signal and a mode of the optical signal, the received first optical signal into a second optical signal in a mode corresponding to the input port; and multiplexes the second optical signal obtained by means of conversion to a few-mode optical fiber for transmission. This implements big data transmission by increasing a transmission capacity of a single optical fiber, and implements fast expansion of the transmission capacity, thereby improving total bandwidth utilization of a system.

FIG. 4 shows a schematic flowchart of a data transmission method according to an embodiment of the present invention. The method may be executed by a data communications apparatus, for example, the mode multiplexer in FIG. 2. The data transmission method may be applied to the networking architecture diagram in FIG. 2.

As shown in FIG. 2, the data transmission method is applied to the spatial division multiplexing system. The spatial division multiplexing system includes at least the optical line terminal, the mode multiplexer, the mode demultiplexer, the optical splitter, and the optical network unit. The optical line terminal is connected to the mode multiplexer by using the single-mode optical fiber. The mode multiplexer is connected to the mode demultiplexer by using the few-mode optical fiber. The mode demultiplexer is connected to the optical splitter by using the single-mode optical fiber. The optical splitter is connected to the optical network unit. For the method, refer to FIG. 4. The method includes the following steps:
S400. Upon startup of the optical line terminal, the optical line terminal transmits a first training sequence to the optical network unit.
S402. The optical line terminal estimates a first crosstalk channel coefficient of first crosstalk on a first link from the optical line terminal to the optical network unit according to the first training sequence.

The first crosstalk on the first link from the optical line terminal to the optical network unit is crosstalk caused to the first link by an optical signal on a second link that shares a same few-mode optical fiber with the first link and that is from one or more other optical line terminals to one or more other optical network units.

S404. The optical line terminal obtains a pre-emphasis coefficient according to the estimated first crosstalk channel coefficient.

S406. The optical line terminal performs pre-emphasis on a to-be-transmitted optical signal on the first link according to the pre-emphasis coefficient to eliminate crosstalk.

Further, the method further includes:
receiving, by the optical line terminal, a first bit error rate transmitted by the optical network unit that is connected to the optical line terminal by using the first link; and
adjusting, by the optical line terminal, the pre-emphasis coefficient according to the received first bit error rate.

Further, the method further includes:
upon working startup of the optical line terminal or upon working startup of the optical network unit, receiving, by the line terminal, a second training sequence transmitted by the optical network unit;
estimating, by the optical line terminal, a second crosstalk channel coefficient of second crosstalk on the first link from the optical network unit to the optical line terminal according to the second training sequence transmitted by the optical network unit, where the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; and
obtaining, by the optical line terminal, a crosstalk cancellation coefficient according to the estimated second crosstalk channel coefficient.

Further, the method further includes:
processing, by the optical line terminal according to the crosstalk cancellation coefficient, an optical signal received on the first link to eliminate crosstalk.

Further, the method further includes:
calculating, by the optical line terminal, a second bit error rate according to the received optical signal transmitted by the optical network unit; and
adjusting, by the optical line terminal, the pre-emphasis coefficient according to the received second bit error rate.

According to the data transmission method provided in this embodiment of the present invention, upon startup of an optical line terminal, the optical line terminal transmits a first training sequence to the optical network unit; estimates a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtains a pre-emphasis coefficient according to the estimated first crosstalk channel coefficient; and performs pre-emphasis on a to-be-transmitted optical signal on the first link according to the pre-emphasis coefficient to eliminate crosstalk. This resolves a problem that mutual crosstalk between optical signals in a few-mode optical fiber causes communication performance deterioration, implements noise reduction processing in the few-mode optical fiber, and greatly improves communication performance.

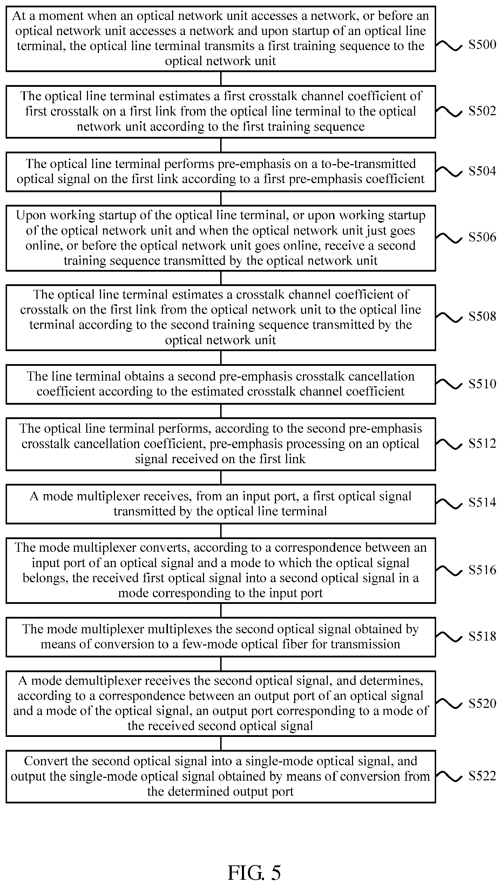

As shown in FIG. 5, FIG. 5 is a specific flowchart of another data transmission method. The data transmission method is applied to the networking architecture in FIG. 2. For details about the networking architecture, refer to corresponding descriptions of FIG. 2. Herein, brief descriptions are given as follows:

The method is applied to the spatial division multiplexing system. The spatial division multiplexing system includes at least the optical line terminal, the mode multiplexer, the mode demultiplexer, the optical splitter, and the optical network unit. The optical line terminal is connected to the mode multiplexer by using the single-mode optical fiber. The mode multiplexer is connected to the mode demultiplexer by using the few-mode optical fiber. The mode demultiplexer is connected to the optical splitter by using the single-mode optical fiber. The optical splitter is connected to the optical network unit. The method includes the following.

The method may be divided into a training stage and a working stage. Details are described as follows:

At a training stage in a downstream direction:
S500. Upon startup of the optical line terminal, the optical line terminal transmits a first training sequence to the optical network unit.

In this way, in a PON system, manners of downstream joint transmission and upstream joint reception may be used to ensure that an existing ONU may not be changed or may be changed a little.

Specifically, in the downstream direction, channel coefficient estimation may be performed according to the transmitted training sequence, to perform noise reduction processing. Then, a noise reduction coefficient is adjusted in real time according to a bit error information feedback on the ONU/ONT side.

S502. The optical line terminal estimates a first crosstalk channel coefficient of first crosstalk on a first link from the optical line terminal to the optical network unit according to the first training sequence.

The first crosstalk on the first link from the optical line terminal to the optical network unit is crosstalk caused to the first link by an optical signal on a second link that shares a same few-mode optical fiber with the first link and that is from one or more other optical line terminals to one or more other optical network units.

At a working stage in an upstream direction, further, the method further includes the following steps:
S504. The optical line terminal performs pre-emphasis on a to-be-transmitted optical signal on the first link according to the pre-emphasis coefficient to eliminate crosstalk.

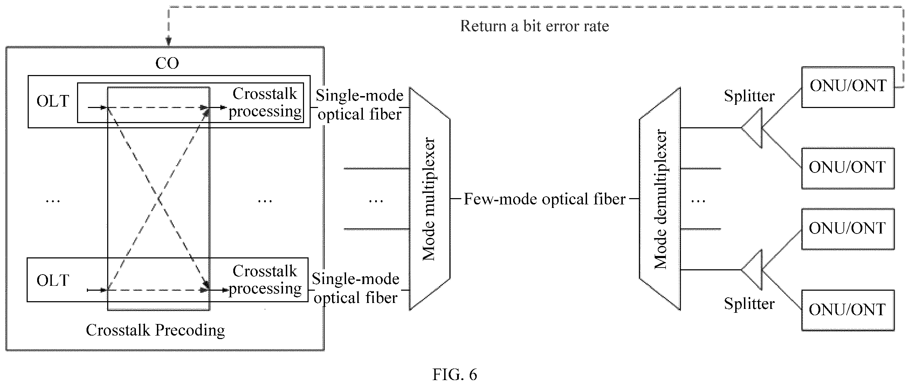

At the working stage, as the optical network unit calculates a bit error rate of a received optical signal, and if the bit error rate increases, the optical network unit further needs to feed back the bit error rate to the optical line terminal, so that the optical line terminal adjusts the crosstalk channel coefficient in a timely manner according to the bit error rate, and further adjusts the pre-emphasis. With reference to FIG. 6, FIG. 6 is a schematic block diagram of data transmission. Details are as follows:

For example, as shown in FIG. 6, FIG. 6 is the schematic block diagram of data transmission. On a central office CO side, namely, at a central office end, OLTs perform crosstalk processing on to-be-transmitted data. In the downstream direction, channel coefficient estimation may be performed according to a transmitted training sequence, to perform noise reduction processing. Then, a noise reduction coefficient is adjusted in real time according to a bit error information feedback on the ONU/ONT side. In FIG. 6, the OLT performs crosstalk cancellation processing as follows:

During the working process in the downstream direction, the method further includes:
receiving, by the optical line terminal, a first bit error rate transmitted by the optical network unit that is connected to the optical line terminal by using the first link;
when the optical network unit connected to the optical line terminal receives an optical signal transmitted by the optical line terminal, and finds that the bit error rate of the received optical signal increases, transmitting, by the optical network unit, the bit error rate to the optical line terminal, so that the optical line terminal adjusts the crosstalk channel coefficient, and further adjusts the pre-emphasis coefficient;
adjusting, by the optical line terminal, the pre-emphasis coefficient according to the received first bit error rate; and
performing, by the optical line terminal, pre-emphasis on a to-be-transmitted optical signal on the first link according to the adjusted pre-emphasis coefficient to eliminate crosstalk.

At a training stage in an upstream direction:
S506. Upon working startup of the optical line terminal or upon working startup of the optical network unit, the line terminal receives a second training sequence transmitted by the optical network unit.
S508. The line terminal estimates a crosstalk channel coefficient of crosstalk on the first link from the optical network unit to the optical line terminal according to the second training sequence transmitted by the optical network unit.

Second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units.

S510. The line terminal obtains a crosstalk cancellation coefficient according to the estimated crosstalk channel coefficient.

When the optical line terminal receives an optical signal transmitted by the optical network unit, the bit error rate is calculated on the optical line terminal side, to adjust a second crosstalk channel coefficient, and further adjust a second pre-emphasis coefficient.

During a working state in the upstream direction:

The method further includes the following steps:
S512. The optical line terminal processes, according to the crosstalk cancellation coefficient, an optical signal received on the first link to eliminate crosstalk.

Further, the method includes:
calculating, by the optical line terminal, a second bit error rate according to the received optical signal transmitted by the optical network unit;
adjusting, by the optical line terminal, the pre-emphasis coefficient according to the received second bit error rate; and
performing, by the optical line terminal according to the adjusted pre-emphasis coefficient, pre-emphasis on received data transmitted by the optical network unit to eliminate crosstalk.

The procedures of the foregoing method are mainly used on the OLT side to eliminate crosstalk, to ensure communication performance thereof by using the system architecture diagram shown in FIG. 2, and ensure data transmission reliability.

Further, the method further includes the following steps:
S514. The mode multiplexer receives, from an input port, a first optical signal transmitted by the optical line terminal.

The first optical signal is a first optical signal that has undergone crosstalk cancellation processing in S500 to S524. For a specific crosstalk process, refer to specific descriptions of S500 to S524, and details are not described herein again.

S516. The mode multiplexer converts, according to a correspondence between an input port of an optical signal and a mode of the optical signal, the received first optical signal into a second optical signal in a mode corresponding to the input port.

S518. The mode multiplexer multiplexes the second optical signal obtained by means of conversion to the few-mode optical fiber for transmission, where a quantity of modes supported by the few-mode optical fiber is between a quantity of modes supported by a multimode optical fiber and a quantity of modes supported by the single-mode optical fiber.

After the mode demultiplexer receives the received optical signal, further processing includes the following steps:
S520. The mode demultiplexer receives the second optical signal, and determines, according to a correspondence between an output port of an optical signal and a mode of the optical signal, an output port corresponding to a mode of the received second optical signal.
S522. Convert the second optical signal into a single-mode optical signal, and output the single-mode optical signal obtained by means of conversion from the determined output port.

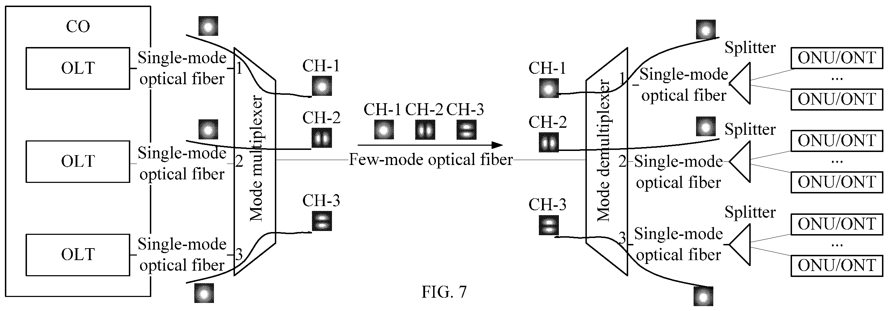

For details, refer to a schematic block diagram of data transmission shown in FIG. 7.

There are multiple OLTs at a central office end, and only three OLTs are illustrated. each OLT is connected to an input port of a mode multiplexer by using a single-mode optical fiber. The mode multiplexer performs mode conversion on optical signals according to different input ports. For example, an optical signal mode of an input port 1 remains LP01, an optical signal mode of an input port 2 is converted into an LPlla mode, and an optical signal mode of an input port 3 is converted into an LP11b mode. The signals in the various modes obtained by means of conversion are multiplexed to a few-mode optical fiber, and are transmitted to an input end of a mode demultiplexer. The mode demultiplexer converts the signals into LP01 mode signals according to the modes of the signals, and outputs the signals to different output ports. For example, the mode demultiplexer directly outputs the LP01-mode signal to an output port 1 without conversion; converts the LP11a-mode signal into an LP01 mode signal, and outputs the LP01 mode signal to an output port 2; and converts an LP11b-mode signal into an LP01 mode signal, and outputs the LP01 mode signal to an output port 3. The optical signals output by the mode multiplexer may be directly received by one ONU/ONT, or may be received by multiple ONUs/ONTs after passing through an optical splitter. Data transmission in an upstream direction is similar thereto.

This embodiment of the present invention proposes a data transmission method, an apparatus, and a system. A mode multiplexer receives, from an input port, a first optical signal transmitted by an optical line terminal; converts, according to a correspondence between an input port of an optical signal and a mode to which the optical signal belongs, the received first optical signal into a second optical signal in a mode corresponding to the input port; and multiplexes the second optical signal obtained by means of conversion to a few-mode optical fiber for transmission. This implements big data transmission by increasing a transmission capacity of a single optical fiber, and implements fast expansion of the transmission capacity, thereby improving total bandwidth utilization of a system.

Further, according to the data transmission method provided in the present invention, channel coefficient estimation may be further performed according to a training sequence, to perform noise reduction processing. This resolves a problem that mutual crosstalk between optical signals in a few-mode optical fiber causes communication performance deterioration, implements noise reduction processing in the few-mode optical fiber, and greatly improves communication performance.

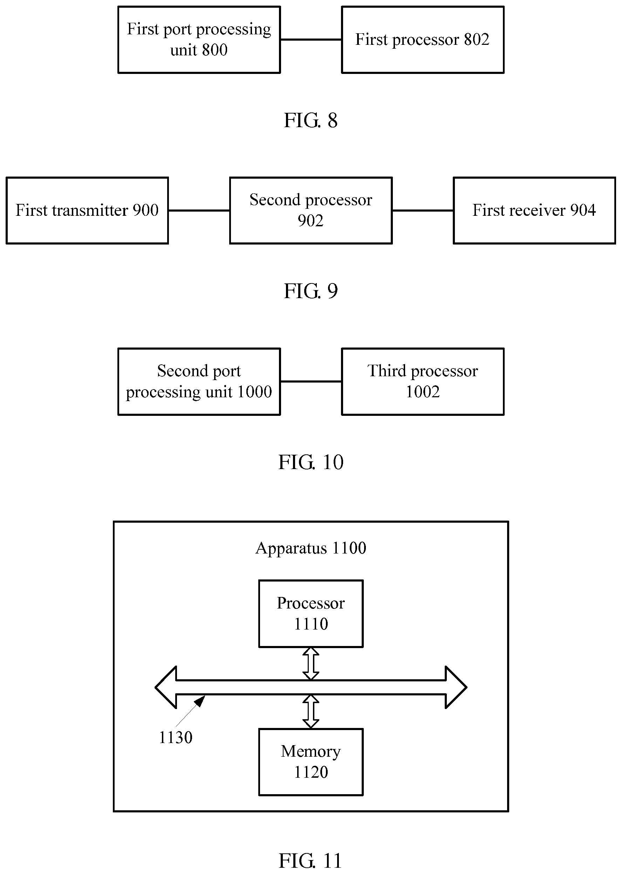

As shown in FIG. 8, FIG. 8 shows a mode multiplexer. The mode multiplexer includes:
a first port processing unit 800, configured to: receive a first optical signal transmitted by an optical line terminal from an input port of the mode multiplexer; and multiplex the second optical signal obtained by means of conversion to a few-mode optical fiber according to an instruction from a first processor for transmission; and
the first processor 802, configured to: convert, according to a correspondence between an input port of an optical signal and a mode of the optical signal, the received first optical signal into the second optical signal in a mode corresponding to the input port; and instruct the port processing unit to multiplex the second optical signal to the few-mode optical fiber for transmission, where a quantity of modes supported by the few-mode optical fiber is between a quantity of modes supported by a multimode optical fiber and a quantity of modes supported by a single-mode optical fiber.

This embodiment of the present invention proposes a mode multiplexer. The mode multiplexer receives, from an input port, a first optical signal transmitted by an optical line terminal; converts, according to a correspondence between an input port of an optical signal and a mode to which the optical signal belongs, the received first optical signal into a second optical signal in a mode corresponding to the input port; and multiplexes the second optical signal obtained by means of conversion to a few-mode optical fiber for transmission. This implements big data transmission by increasing a transmission capacity of a single optical fiber, and implements fast expansion of the transmission capacity, thereby improving total bandwidth utilization of a system.

As shown in FIG. 9, FIG. 9 shows an optical line terminal. The optical line terminal includes:
a first transmitter 900, configured to: upon startup of the optical line terminal, transmit, by the optical line terminal, a first training sequence to the optical network unit; and transmit the pre-emphasized optical signal according to an instruction from a second processor; and
the second processor 902, configured to: estimate a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; perform pre-emphasis on a to-be-transmitted optical signal on the first link according to the pre-emphasis coefficient; and instruct the transmitter to transmit the pre-emphasized optical signal.

Further, the optical line terminal further includes:
a first receiver 904, configured to receive a first bit error rate transmitted by the optical network unit that is connected to the optical line terminal by using the first link; where
the second processor 902 is further configured to adjust the pre-emphasis coefficient according to the received first bit error rate; and
the first transmitter 900 is further configured to transmit the pre-emphasized optical signal according to the instruction from the second processor.

Further, the first receiver 904 is further configured to: upon working startup of the optical line terminal or upon working startup of the optical network unit, receive, by the line terminal, a second training sequence transmitted by the optical network unit.

The second processor 902 is further configured to: estimate a second crosstalk channel coefficient of second crosstalk on the first link from the optical network unit to the optical line terminal according to the second training sequence transmitted by the optical network unit, where the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; obtain a crosstalk cancellation coefficient according to the estimated second crosstalk channel coefficient; and process, according to the crosstalk cancellation coefficient, an optical signal received on the first link to eliminate crosstalk.

Further, the second processor 902 is further configured to: calculate a second bit error rate according to the received optical signal transmitted by the optical network unit; adjust the pre-emphasis coefficient according to the received second bit error rate; and perform, according to an adjusted second pre-emphasis coefficient, adjusted pre-emphasis on data received on the first link to eliminate crosstalk.

According to the data transmission method provided in this embodiment of the present invention, upon startup of an optical line terminal, the optical line terminal transmits a first training sequence to the optical network unit; estimates a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtains a pre-emphasis coefficient according to the estimated first crosstalk channel coefficient; and performs pre-emphasis on a to-be-transmitted optical signal on the first link according to the pre-emphasis coefficient to eliminate crosstalk. This resolves a problem that mutual crosstalk between optical signals in a few-mode optical fiber causes communication performance deterioration, implements noise reduction processing in the few-mode optical fiber, and greatly improves communication performance.

As shown in FIG. 10, FIG. 10 is a structural block diagram of a mode demultiplexer. The mode demultiplexer includes:
a second port processing unit 1000, configured to receive a second optical signal; and output, according to an instruction from determined output port; and
the third processor 1002, configured to: determine, according to a correspondence between an output port of an optical signal and a mode of the optical signal, an output port corresponding to a mode of the received second optical signal; convert the second optical signal into the single-mode optical signal; and instruct the second port processing unit to output the single-mode optical signal obtained by means of conversion from the determined output port.

This embodiment of the present invention proposes a mode demultiplexer. The mode demultiplexer is configured to: receive a second optical signal; determine, according to a correspondence between an output port of an optical signal and a mode of the optical signal, an output port corresponding to a mode of the received second optical signal; convert the second optical signal into a single-mode optical signal; and instruct the second port processing unit to output the single-mode optical signal obtained by means of conversion from the determined output port. This implements big data transmission by increasing a transmission capacity of a single optical fiber, and implements fast expansion of the transmission capacity, thereby improving total bandwidth utilization of a system.

The present invention further provides a spatial division multiplexing system. A specific networking architecture is shown in FIG. 2.

The spatial division multiplexing system includes an optical line terminal, a mode multiplexer, a mode demultiplexer, an optical network unit, and the like. For specific functions of the modules, refer to specific descriptions of FIG. 8 to FIG. 10. Herein, brief descriptions are given as follows:
The mode multiplexer is configured to: receive, from an input port, a first optical signal transmitted by the optical line terminal; convert, according to a correspondence between an input port of an optical signal and a mode of the optical signal, the received first optical signal into a second optical signal in a mode corresponding to the input port; and multiplex the second optical signal obtained by means of conversion to a few-mode optical fiber for transmission. A quantity of modes supported by the few-mode optical fiber is between a quantity of modes supported by a multimode optical fiber and a quantity of modes supported by a single-mode optical fiber.

The optical line terminal is configured to: upon startup of the optical line terminal, transmit a first training sequence to the optical network unit; estimate a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; and perform pre-emphasis on a to-be-transmitted optical signal on the first link according to the pre-emphasis coefficient to eliminate crosstalk.

The mode demultiplexer is configured to: receive the second optical signal transmitted by the mode multiplexer; determine, according to a correspondence between an output port of an optical signal and a mode of the optical signal, an output port corresponding to a mode of the received second optical signal; convert the second optical signal into a single-mode optical signal; and output the single-mode optical signal obtained by means of conversion from the determined output port.

As shown in FIG. 11, an embodiment of the present invention further provides a data communications apparatus 1100. The apparatus 1100 includes a processor 1110, a memory 1120, and a bus system 1130. The processor 1110 and the memory 1120 are connected by using the bus system 1130. The memory 1120 is configured to store an instruction. The processor 1110 is configured to execute the instruction stored in the memory 1120.

The processor 1110 is configured to: receive, from an input port, a first optical signal transmitted by an optical line terminal; convert, according to a correspondence between an input port of an optical signal and a mode of the optical signal, the received first optical signal into a second optical signal in a mode corresponding to the input port; and multiplex the second optical signal obtained by means of conversion to a few-mode optical fiber for transmission, where a quantity of modes supported by the few-mode optical fiber is between a quantity of modes supported by a multimode optical fiber and a quantity of modes supported by a single-mode optical fiber. Alternatively,

Alternatively, the processor 1110 is configured to: upon startup of an optical line terminal, transmit a first training sequence to the optical network unit; estimate a first crosstalk channel coefficient of first crosstalk on a first link from the optical line terminal to the optical network unit according to the first training sequence, where the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; and perform pre-emphasis on a to-be-transmitted optical signal on the first link according to the pre-emphasis coefficient to eliminate crosstalk.

Specifically, for a specific execution procedure of the processor 1110, refer to descriptions corresponding to the flowcharts shown in FIG. 1 to FIG. 7. Details are not described herein again.

It should be understood that in this embodiment of the present invention, the processor 1110 may be a central processing unit (Central Processing Unit, "CPU" for short), or the processor 1010 may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor, or the like.

The memory 1120 may include a read-only memory and a random access memory, and provide an instruction and data to the processor 1010. A part of the memory 1120 may further include a non-volatile random access memory. For example, the memory 1120 may further store device type information.

In addition to a data bus, the bus system 1130 may further include a power bus, a control bus, a status signal bus, and the like. However, for clear description, various types of buses in the figure are marked as the bus system 1130.

In an implementation process, steps in the foregoing methods can be implemented by using a hardware integrated logic circuit in the processor 1110, or by using instructions in a form of software. The steps of the methods disclosed with reference to the embodiments of the present invention may be directly performed by using a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1120, and the processor 1110 reads information from the memory 1120 and completes the steps in the foregoing methods in combination with the hardware of the processor. To avoid repetition, details are not described herein again.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communications connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method is applied to a spatial division multiplexing system, the spatial division multiplexing system comprises at least an optical line terminal, a mode multiplexer, a mode demultiplexer, an optical splitter, and an optical network unit, the optical line terminal is connected to the mode multiplexer by using a single-mode optical fiber, the mode multiplexer is connected to the mode demultiplexer by using a few-mode optical fiber, the mode demultiplexer is connected to the optical splitter by using a single-mode optical fiber, the optical splitter is connected to the optical network unit, and the method comprises:
receiving, by the mode multiplexer from an input port, a first optical signal transmitted by the optical line terminal;
converting, by the mode multiplexer according to a correspondence between an input port of an optical signal and a mode of the optical signal, the received first optical signal into a second optical signal in a mode corresponding to the input port; and
multiplexing, by the mode multiplexer, the second optical signal obtained by means of conversion to the few-mode optical fiber for transmission, wherein a quantity of modes supported by the few-mode optical fiber is between a quantity of modes supported by a multimode optical fiber and a quantity of modes supported by the single-mode optical fiber.

2. The data transmission method according to claim 1, wherein the method further comprises:
upon startup of the optical line terminal, transmitting, by the optical line terminal, a first training sequence to the optical network unit;
estimating, by the optical line terminal, a first crosstalk channel coefficient of first crosstalk on a first link from the optical line terminal to the optical network unit according to the first training sequence, wherein the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; and
obtaining a pre-emphasis coefficient according to the estimated first crosstalk channel coefficient.

3. The data transmission method according to claim 2, wherein the method further comprises:
performing, by the optical line terminal according to the pre-emphasis coefficient, pre-emphasis on a to-be-transmitted optical signal on the first link to eliminate crosstalk.

4. The data transmission method according to claim 2 or 3, wherein the method further comprises:
receiving, by the optical line terminal, a first bit error rate transmitted by the optical network unit that is connected to the optical line terminal by using the first link; and
adjusting, by the optical line terminal, the pre-emphasis coefficient according to the received first bit error rate.

5. The data transmission method according to claim 1 or 2, wherein the method further comprises:
upon working startup of the optical line terminal or upon working startup of the optical network unit, receiving, by the line terminal, a second training sequence transmitted by the optical network unit;
estimating, by the line terminal, a second crosstalk channel coefficient of second crosstalk on the first link from the optical network unit to the optical line terminal according to the second training sequence transmitted by the optical network unit, wherein the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; and
obtaining, by the line terminal, a crosstalk cancellation coefficient according to the estimated second crosstalk channel coefficient.

6. The data transmission method according to claim 5, wherein the method further comprises:
processing, by the optical line terminal according to the crosstalk cancellation coefficient, an optical signal received on the first link to eliminate crosstalk.

7. The data transmission method according to claim 5 or 6, wherein the method further comprises:
calculating, by the optical line terminal, a second bit error rate according to the received optical signal transmitted by the optical network unit; and
adjusting, by the optical line terminal, the pre-emphasis coefficient according to the received second bit error rate.

8. The data transmission method according to claim 1, wherein the method further comprises:
receiving, by the mode demultiplexer, the second optical signal transmitted by the mode multiplexer;
determining, by the mode demultiplexer according to a correspondence between an output port of an optical signal and a mode of the optical signal, an output port corresponding to a mode of the received second optical signal; and
converting, by the mode demultiplexer, the second optical signal into a single-mode optical signal, and outputting the single-mode optical signal obtained by means of conversion from the determined output port.

9. A data transmission method, wherein the method is applied to a spatial division multiplexing system, the spatial division multiplexing system comprises at least an optical line terminal, a mode multiplexer, a mode demultiplexer, an optical splitter, and an optical network unit, the optical line terminal is connected to the mode multiplexer by using a single-mode optical fiber, the mode multiplexer is connected to the mode demultiplexer by using a few-mode optical fiber, the mode demultiplexer is connected to the optical splitter by using a single-mode optical fiber, the optical splitter is connected to the optical network unit, a quantity of modes to which optical signals transmitted in the few-mode optical fiber belong is between a quantity of modes supported by a multimode optical fiber and a quantity of modes supported by the single-mode optical fiber, and the method comprises:
upon startup of the optical line terminal, transmitting, by the optical line terminal, a first training sequence to the optical network unit;
estimating, by the optical line terminal, a first crosstalk channel coefficient of first crosstalk on a first link from the optical line terminal to the optical network unit according to the first training sequence, wherein the first crosstalk on the first link from the optical line terminal to the optical network unit is crosstalk caused to the first link by an optical signal on a second link that shares a same few-mode optical fiber with the first link and that is from one or more other optical line terminals to one or more other optical network units;
obtaining, by the optical line terminal, a pre-emphasis coefficient according to the estimated first crosstalk channel coefficient; and
performing, by the optical line terminal according to the pre-emphasis coefficient, pre-emphasis on a to-be-transmitted optical signal on the first link to eliminate crosstalk.

10. The data transmission method according to claim 9, wherein the method further comprises:
receiving, by the optical line terminal, a first bit error rate transmitted by the optical network unit that is connected to the optical line terminal by using the first link; and
adjusting, by the optical line terminal, the pre-emphasis coefficient according to the received first bit error rate.

11. The data transmission method according to claim 9 or 10, wherein the method further comprises:
upon working startup of the optical line terminal or upon working startup of the optical network unit, receiving, by the line terminal, a second training sequence transmitted by the optical network unit;
estimating a second crosstalk channel coefficient of second crosstalk on the first link from the optical network unit to the optical line terminal according to the second training sequence transmitted by the optical network unit, wherein the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; and
obtaining, by the optical line terminal, a crosstalk cancellation coefficient according to the estimated second crosstalk channel coefficient.

12. The data transmission method according to claim 11, wherein the method further comprises:
processing, by the optical line terminal according to the crosstalk cancellation coefficient, an optical signal received on the first link to eliminate crosstalk.

13. The data transmission method according to claim 11 or 12, wherein the method further comprises:
calculating, by the optical line terminal, a second bit error rate according to the received optical signal transmitted by the optical network unit; and
adjusting, by the optical line terminal, the pre-emphasis coefficient according to the received second bit error rate.

14. A mode multiplexer, wherein the mode multiplexer comprises:
a first port processing unit, configured to: receive a first optical signal transmitted by an optical line terminal from an input port of the mode multiplexer; and multiplex the second optical signal obtained by means of conversion to a few-mode optical fiber according to an instruction from a first processor for transmission; and
the first processor, configured to: convert, according to a correspondence between an input port of an optical signal and a mode of the optical signal, the received first optical signal into the second optical signal in a mode corresponding to the input port; and instruct the port processing unit to multiplex the second optical signal to the few-mode optical fiber for transmission, wherein a quantity of modes supported by the few-mode optical fiber is between a quantity of modes supported by a multimode optical fiber and a quantity of modes supported by a single-mode optical fiber.

15. An optical line terminal, wherein the optical line terminal comprises:
a first transmitter, configured to: upon startup of the optical line terminal, transmit, by the optical line terminal, a first training sequence to the optical network unit; and transmit the pre-emphasized optical signal according to an instruction from a second processor; and
the second processor, configured to: estimate a first crosstalk channel coefficient of first crosstalk on a first link from the optical line terminal to the optical network unit according to the first training sequence, wherein the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; perform pre-emphasis on a to-be-transmitted optical signal on the first link according to the pre-emphasis coefficient; and instruct the transmitter to transmit the pre-emphasized optical signal.

16. The optical line terminal according to claim 15, wherein the optical line terminal further comprises:
a first receiver, configured to receive a first bit error rate transmitted by the optical network unit that is connected to the optical line terminal by using the first link; wherein
the second processor is further configured to adjust the pre-emphasis coefficient according to the received first bit error rate; and
the first transmitter is further configured to transmit the pre-emphasized optical signal according to the instruction from the second processor.

17. The optical line terminal according to claim 16, wherein the first receiver is further configured to: upon working startup of the optical line terminal or upon working startup of the optical network unit, receive, by the line terminal, a second training sequence transmitted by the optical network unit; and
the second processor is further configured to: estimate a second crosstalk channel coefficient of second crosstalk on the first link from the optical network unit to the optical line terminal according to the second training sequence transmitted by the optical network unit, wherein the second crosstalk on the first link from the optical network unit to the optical line terminal is crosstalk caused to the first link by an optical signal on the second link that shares the same few-mode optical fiber with the first link and that is from the one or more other optical line terminals to the one or more other optical network units; obtain a crosstalk cancellation coefficient according to the estimated second crosstalk channel coefficient; and process, according to the crosstalk cancellation coefficient, an optical signal received on the first link to eliminate crosstalk.

18. The optical line terminal according to claim 16, wherein the second processor is further configured to: calculate a second bit error rate according to the received optical signal transmitted by the optical network unit; adjust the pre-emphasis coefficient according to the received second bit error rate; and perform, according to an adjusted second pre-emphasis coefficient, adjusted pre-emphasis on data received on the first link to eliminate crosstalk.

19. A mode demultiplexer, wherein the mode demultiplexer comprises:
a second port processing unit, configured to receive a second optical signal; and output, according to an instruction from the third processor, the single-mode optical signal obtained by means of conversion from the determined output port; and
the third processor, configured to: determine, according to a correspondence between an output port of an optical signal and a mode of the optical signal, an output port corresponding to a mode of the received second optical signal; convert the second optical signal into the single-mode optical signal; and instruct the second port processing unit to output the single-mode optical signal obtained by means of conversion from the determined output port.

20. A spatial division multiplexing system, wherein the spatial division multiplexing system comprises at least the mode multiplexer according to claim 14.

21. The spatial division multiplexing system according to claim 20, wherein the spatial division multiplexing system further comprises at least the optical line terminal according to any one of claims 15 to 18.

22. The spatial division multiplexing system according to claim 20, wherein the spatial division multiplexing system further comprises at least the mode demultiplexer according to claim 19.

23. A data communications apparatus, wherein the apparatus comprises a processor, a memory, and a bus system; the processor and the memory are connected by using the bus system; the memory is configured to store an instruction; and the processor is configured to execute the instruction stored in the memory; and
the processor is configured to: receive, from an input port, a first optical signal transmitted by an optical line terminal; convert, according to a correspondence between an input port of an optical signal and a mode of the optical signal, the received first optical signal into a second optical signal in a mode corresponding to the input port; and multiplex the second optical signal obtained by means of conversion to a few-mode optical fiber for transmission, wherein a quantity of modes supported by the few-mode optical fiber is between a quantity of modes supported by a multimode optical fiber and a quantity of modes supported by a single-mode optical fiber.

24. A data communications apparatus, wherein the apparatus comprises a processor, a memory, and a bus system; the processor and the memory are connected by using the bus system; the memory is configured to store an instruction; and the processor is configured to execute the instruction stored in the memory; and
the processor is configured to: upon startup of an optical line terminal, transmit a first training sequence to an optical network unit; estimate a first crosstalk channel coefficient of first crosstalk on a first link from the optical line terminal to the optical network unit according to the first training sequence, wherein the first crosstalk on the first link from the optical line terminal to the optical network unit is crosstalk caused to the first link by an optical signal on a second link that shares a same few-mode optical fiber with the first link and that is from one or more other optical line terminals to one or more other optical network units; obtain a pre-emphasis coefficient according to the estimated first crosstalk channel coefficient; and perform pre-emphasis on a to-be-transmitted optical signal on the first link according to the pre-emphasis coefficient to eliminate crosstalk.
